# FASCICULE DE BREVET EUROPEEN

(11) **EP 0 452 757 B1**
(45) Date de publication et mention de la délivrance du brevet: **10.11.1993**
(21) Numéro de dépôt: 91105468.2
(22) Date de dépôt: 06.04.1991
(51) Int. Cl.: G04B 47/06, G01C 17/34

(54) **Montre boussole du type à entraînement mécanique ou électromécanique**
Mechanische oder elektromechanische Kompassuhr
Mechanical or electromechanical compass-watch

(30) Priorité: 18.04.1990 CH 1308/90
(43) Date de publication de la demande: 23.10.1991
(73) Titulaire: Compagnie des Montres Longines, Francillon S.A., CH-2610 St-Imier (CH)
(72) Inventeur: Vaucher, Frank, CH-2612 Cormoret (CH)
(74) Mandataire: Barbeaux, Bernard

(56) Documents cités:
- EP-A- 0 351 469
- CH-A- 11 340
- DE-A- 3 361 513
- FR-A- 2 203 106
- US-A- 4 899 451

## Description

L'invention concerne une montre boussole, et plus particulièrement une montre boussole du type à entraînement mécanique ou électromécanique.

On connait déjà, comme par exemple décrit dans la demande de brevet FR 2 203 106, une montre boussole à entraînement mécanique ou électromécanique comportant des éléments indicateurs de temps, tels que des aiguilles respectivement des heures et des minutes,qui sont associés à des moyens d'indication de direction constitués par une rose des vents.

Cette rose des vents, qui permet donc de s'orienter en indiquant la position des différents points cardinaux, est liée cinématiquement à un mouvement horométrique qui commande classiquement le déplacement des aiguilles des heures et des minutes et qui, à chaque instant, oriente la rose des vents de sorte que le sud, inscrit sur celle-ci, pointe dans une direction correspondant à la bissectrice de l'angle aigu qui est formé entre l'aiguille des heures et le midi repéré sur la montre. Bien entendu, pour déterminer valablement la direction du sud, et par conséquent celle des autres points cardinaux, il est indispensable, lors de la lecture, de pointer simultanément l'aiguille des heures en direction du soleil.

Par ailleurs, on connait d'après notamment la demande de brevet DE 3 631 513, une montre boussole qui est pourvue, en plus des deux aiguilles classiques des heures et des minutes, d'une troisième aiguille appelée aiguille solaire, qui effectue, sous l'action du mouvement horométrique qui la commande, un tour de cadran toutes les 24 heures et qui forme le moyen indicateur à pointer en direction du soleil.

Ainsi, pour déterminer son orientation, il suffit de pointer cette aiguille solaire en direction du soleil, puis de lire sur la montre les indications de direction, à savoir de relever l'information donnée par les différents points cardinaux qui sont marqués fixement sur la montre, et plus particulièrement sur son cadran.

Ces deux types de montre permettent donc de s'orienter très rapidement, en évitant l'utilisation d'une aiguille aimantée qui, on le sait, est particulièrement sensible à toute influence extérieure. De plus, cette aiguille aimantée peut être perturbée de façon non négligeable par les champs parasites qui peuvent être créés par la montre elle-même.

Toutefois, ces deux types de montres boussoles à entraînement mécanique ou électromécanique peuvent fournir des erreurs d'orientation importantes, essentiellement en raison du décalage entre l'heure légale ou locale indiquée par la montre et l'heure solaire vraie qui, en fait, est celle qu'il faudrait prendre en compte uniquement, puisque l'orientation est donnée à l'utilisateur en fonction de sa position par rapport au soleil.

Ce décalage entre l'heure légale ou locale et l'heure solaire vraie peut être important et peut entraîner des erreurs de l'ordre de plusieurs degrés.

En effet, on sait que l'heure solaire vraie coïncide avec l'heure légale ou locale uniquement pour les personnes se situant exactement au niveau de l'un des méridiens (celui de Greenwich pour l'Europe de l'ouest). Tout décalage géographique par rapport à ce méridien cause un décalage subséquent entre les deux heures respectivement légale et solaire vraie et donne un relevé totalement imprécis.

De plus, que ce soit l'hiver ou a fortiori l'été, notre heure locale ne coïncide absolument pas avec l'heure solaire vraie, les écarts variant de une à deux heures.

Bien évidemment, une méthode de correction pourrait consister à réajuster en permanence, c'est-à-dire à chaque mesure, l'heure affichée sur la montre; en d'autres termes à remplacer l'heure légale par l'heure solaire vraie, et inversement.

Cependant une telle manipulation peut aussi entraîner des erreurs si l'utilisateur, après plusieurs relevés et plusieurs remises à l'heure légale ne se souvient plus exactement sur quelle heure, légale ou solaire, il est calé.

De plus, de telles manipulations nécessitent le débrayage de l'entraînement du mouvement horométrique par rapport aux aiguilles, ce qui provoque inévitablement la perte de l'heure juste.

Aussi, l'invention a-t-elle pour but de répondre à ces inconvénients en proposant une montre boussole capable de s'affranchir des variations saisonnières d'heure, des décalages géographiques par rapport aux méridiens formant la référence de l'heure légale et des décalages causés par l'équation du temps,et ce afin d'assurer à l'utilisateur une excellente précision lors de son orientation.

L'invention a aussi pour but de fournir une montre boussole répondant au problème ci-dessus mentionné, et dont la structure permette de faire facilement appel à un mouvement horométrique classique sans adaptation coûteuse.

A cet effet, l'invention a pour objet une montre boussole du type à entraînement mécanique ou électromécanique, comprenant :
- au moins un élément indicateur de temps entraîné cinématiquement en rotation par un mouvement horométrique mécanique ou électromécanique, et destiné notamment à être pointé en direction du soleil , et
- des moyens d'indication de direction ménagés sur ladite montre, permettant de connaître, en fonction de l'orientation dudit moyen indicateur, la direction d'au moins l'un des points cardinaux, caractérisée en ce qu'elle comporte des moyens de correction du positionnement des points cardinaux, susceptibles de prendre en compte l'équation du temps et de corriger toute variation entre l'heure solaire vraie et l'heure légale ou locale.

On comprend donc qu'en prévoyant judicieusement des moyens de correction au niveau des points cardinaux, on peut parfaitement répondre au problème du décalage entre les différentes heures, respectivement légale et solaire vraie, sans nécessiter de concevoir ni de fabriquer des mécanismes complexes, notamment si l'un des buts recherchés est l'adaptation sur un mouvement horloger ou horométrique classique.

L'invention sera mieux comprise à la lecture de la description détaillée qui suit, prise en référence aux dessins annexés qui sont donnés uniquement à titre d'exemple, et dans lesquels :
- la figure 1 est une vue de dessus d'une montre boussole selon l'invention;
- la figure 2 est une vue en coupe partielle de l'aiguillage de la montre boussole selon l'invention, faite selon l'axe 12h-6h, lorsque toutes les aiguilles sont directement superposées;
- les figures 3a,3b et 3c sont des vues de dessus et dans différentes positions d'un mécanisme d'entraînement et de limitation de mouvement d'un disque d'orientation, partiellement représenté, faisant partie du cadran des figures 1 et 2;
- la figure 4 est une vue schématique et de dessus de la montre boussole selon l'invention, représentant plus particulièrement une lunette tournante destinée notamment à équiper une telle montre boussole, cette lunette étant représentée dans sa position relevée et dans une première direction par rapport au soleil;
- la figure 5 est une vue de côté de la figure 4, représentant la lunette orientée selon une deuxième direction;
- la figure 6 est une vue de dessus de la lunette seule, dans sa position rabattue; et
- les figures 7 est une vue faite selon la flèche **VII** de la figure 6, montrant de façon plus détaillée une articulation de la lunette selon l'invention,; et
- les figures 8 et 9 sont des vues en coupe de la lunette des figures 1 et 4 à 6, faites respectivement selon les lignes **VIII-VIII** de la figure 7 et **IX-IX** de la figure 6.

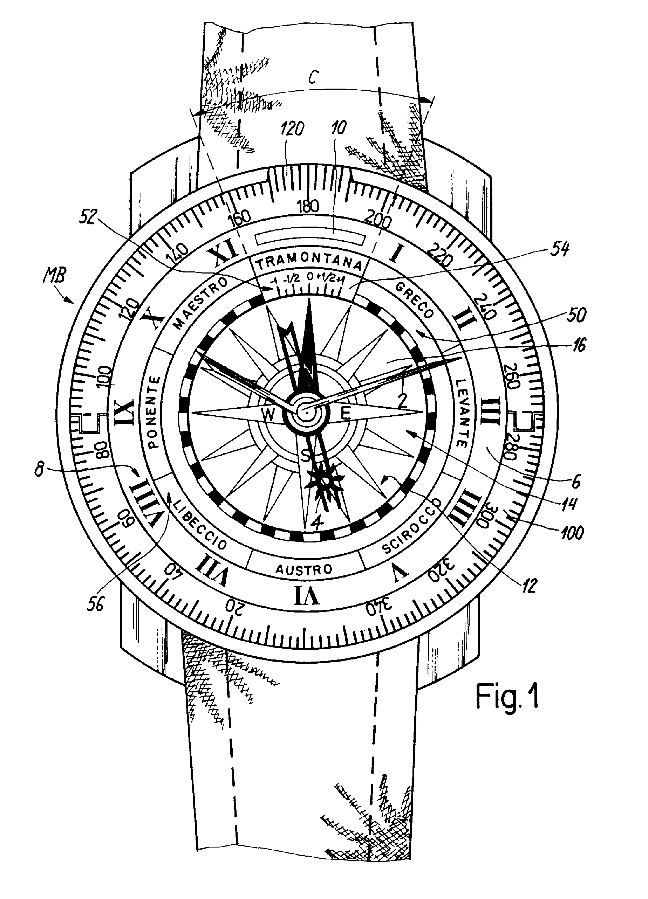

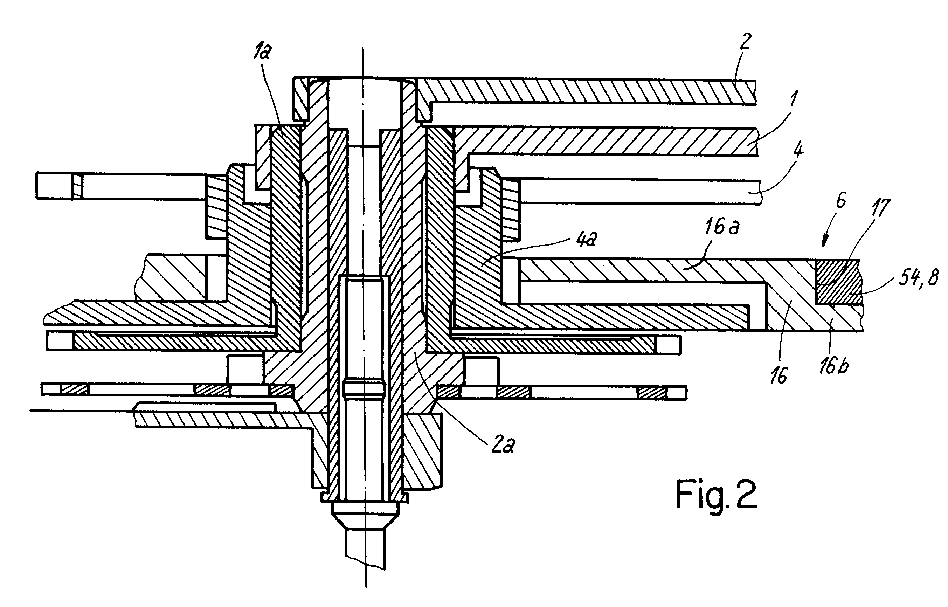

En se référant désormais aux figures 1 et 2, on décrira ci-après et dans son ensemble une montre boussole selon l'invention.

Cette montre boussole comporte classiquement un premier et un deuxième élément indicateur de temps constitués respectivement par une aiguille des heures 1 et par une aiguille des minutes 2.

Elle comporte de plus un troisième élément indicateur 4, que l'on désignera ci-après comme aiguille solaire et qui est destiné, comme on le comprendra, à être orienté en direction du soleil.

Ces trois éléments indicateurs de temps 1,2 et 4 sont entraînés cinématiquement en rotation par un mouvement d'horlogerie ou horométrique, non représenté, du type, soit entièrement mécanique, soit électromécanique.

L'agencement de ces trois éléments indicateurs 1,2 et 4 et celui du mouvement horométrique qui les entraîne n'ont été représentés sur la figure 2 que de façon partielle, puisque ces dispositions sont classiques et sont à la portée de l'homme du métier.

On précisera simplement que les trois aiguilles 1,2 et 4 sont portées respectivement par un canon des heures 1a, par un canon des minutes 2a et par un dernier canon 4a, dit canon solaire. Ces trois canons 1a,2a et 4a sont guidés coaxialement et pivotent les uns par rapport aux autres et ils sont entraînés classiquement par des trains d'engrenage, non représenté.

L'aiguille des heures 1 est entraînée à raison d'un tour toutes les douze heures, tandis que l'aiguille solaire 4 effectue une rotation complète toutes les vingt-quatre heures.

Ces aiguilles 1 et 4 se trouvent directement superposées à minuit, tandis qu'elles se trouvent sur une même direction, mais dans des sens opposés à midi.

Ces trois aiguilles 1,2 et 4 se déplacent au dessus d'un cadran 6 qui est divisé en plusieurs régions fournissant respectivement différentes informations.

La région la plus extérieure 8 qui est fixe comporte des indications d'heure marquées de I à XI, la douzième inscription référencée 10 correspondant avantageusement à la marque de commerce sous laquelle la montre selon l'invention est vendue.

Cette région pourrait bien évidemment comporter un autre type d'indication horaire, selon des séquences différentes.

Ainsi, on précisera que bien que cet exemple de réalisation soit décrit avec trois éléments indicateurs 1,2 et 4, cette montre boussole, selon un mode de réalisation non représenté, peut ne comporter uniquement que l'élément indicateur 4 qui est lui indispensable pour réaliser la fonction boussole proprement dite.

En effet, il suffit pour cela de marquer la région 8 des chiffres 1 à 24 ou 23 (ou I à XXIV ou XXIII ), l'aiguille solaire 4 donnant dans ce mode de réalisation une indication horaire sur vingt-quatre heures.

Le cadran 6 est pourvu, coaxialement à cette première région 8, d'une deuxième région 12 qui est mobile et qui comporte des moyens d'indication de direction formés, dans cet exemple, par une rose des vents 14 sur laquelle sont inscrits plusieurs points cardinaux, respectivement N pour le Nord, S pour le Sud, W pour l'Ouest et E pour l'Est.

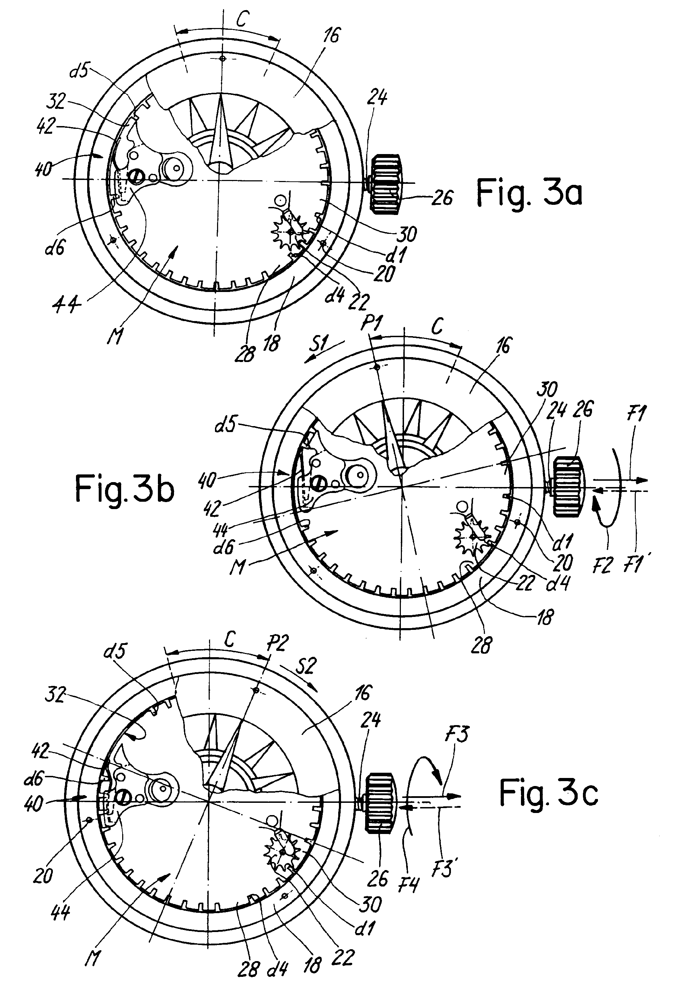

Ces moyens d'indication de direction 12 et N-S-W-E sont matérialisés sur un disque d'orientation 16 ( représenté partiellement sur les figures 3a à 3c ) qui peut pivoter coaxialement aux trois aiguilles 1, 2 et 4, soit de préférence comme cela est représenté sur la figure 2 de façon coplanaire au reste du cadran, soit sur ou sous celui-ci.

Comme on le voit sur la figure 2, le disque mobile 16, qui est percé en son centre pour permettre le passage du canon solaire 4a, comporte un épaulement 17 qui vient s'engager dans un évidement correspondant ménagé dans la partie fixe du reste du cadran. La partie centrale 16a du disque 16 est donc surélévée par rapport à la base 16b de ce même disque, qui comme on le comprendra, est solidaire d'un anneau 18, visible sur les figures 3a à 3c. La surface supérieure visible de la partie centrale 16a sur laquelle est marquée la rose des vents 14 (figure 1) se situe donc au même niveau que la surface supérieure du reste du cadran.

En se reportant désormais aux figures 3a à 3c, on voit que le disque d'orientation 16 est monté fixement à sa périphérie sur l'anneau 18, qui est du type anneau de quantièmes, par l'intermédiaire de trois plots 20. Cet anneau 18, qui est au moins en partie intérieurement denté, constitue l'un des éléments d'un mécanisme M qui est susceptible d'entraîner, mais aussi de limiter le mouvement angulaire du disque d'orientation 16.

Ce mécanisme d'entraînement et de limitation de mouvement M comporte de plus un pignon d'entraînement 22 dont l'axe de guidage inférieur est monté sur une platine (non représenté).

Le mouvement de ce pignon d'entraînement 22 est commandé uniquement par un organe de commande extérieurement accessible, tel qu'une tige 24 liée à une couronne de remontoir 26 qui, pour pouvoir actionner le pignon d'entraînement 22, doit être tirée dans une position représentée aux figures 3b et 3c.

L'anneau 18 comporte au moins deux régions 28 et 30, dites régions nues, qui sont dépourvues de dents d'engrènement. Ainsi, lorsque l'organe de commande 24,26 est tiré, et qu'il est tourné par l'utilisateur, notamment selon les flèches F1,F2 et F3, F4, le pignon d'entraînement 22 en engrenant avec les dents d1 à d4 de l'anneau 18, fait pivoter cet anneau 18 selon un sens désiré S1 ou S2, ce qui provoque le déplacement angulaire du disque d'orientation 16 dans un sens correspondant.

Toutefois, lorsque le pignon d'entraînement 22 atteint les régions 28 ou 30, il ne rencontre aucune dent d'engrènement, si bien qu'il se trouve découplé de l'anneau 18, tout au moins pour le sens de pivotement dans lequel il était entraîné par l'organe de commande extérieur 24,26.

Ainsi, que ce soit pour le sens de rotation S1 ou pour le sens de rotation S2, le mécanisme d'entraînement M limite le déplacement angulaire de l'anneau 18, et donc celui du disque d'orientation 16, jusqu'à deux positions P1 et P2, dites positions limites.

Ces deux positions limites P1 et P2 définissent donc une course de déplacement angulaire du disque d'orientation 16, appelée course de correction C.

Le mécanisme M est de plus associé à des moyens de freinage 40 constitués par une troisième région nue 32 ménagée sur l'anneau 18, et sur laquelle est disposé en contact de frottement un organe élastique 42 formé, par exemple, par une lame de ressort du type ressort-sautoir.

L'organe élastique 42 est fixé sur un socle 44 qui est par exemple solidaire de la platine du mouvement horométrique (non représenté), ce socle 44 chevauchant partiellement certaines des dents de l'anneau 18, si bien qu'il maintient cet anneau 18 en place, tout au moins dans une direction axiale.

L'organe élastique 42 est conformé pour venir en appui latéral sur le flanc lisse de la troisième région nue 32, si bien qu'il applique sur celle-ci une légère pression qui freine le déplacement de l'anneau 18 et celui du disque d'orientation 16 sur toute la course de correction C.

De plus, on observera que l'organe élastique 42 est conformé de sorte que son extrémité libre forme des moyens de butée de l'anneau 18, notamment lorsque cet anneau occupe ses positions limites P1 et P2.

Comme on le voit sur la figure 3b, lorsque le disque d'orientation 16, et plus particulièrement la marque N inscrite sur celui-ci, atteint sa première position limite P1, l'extrémité libre de l'organe élastique vient buter contre l'un (référencé d5) de deux bords extrêmes d5 et d6 qui délimitent la troisième région nue 32. Le bord extrême d5 est constitué, dans cet exemple de réalisation, par l'une des dents de l'anneau 18 qui n'ont ici plus aucune fonction d'engrènement.

Inversement, lorsque le disque d'orientation 16, et plus particulièrement la marque N inscrite sur celui-ci, atteint sa seconde position extrême P2, l'arrière de la partie coudée de l'extrémité libre de l'organe élastique 42 vient buter contre l'autre bord extrême d6 de la troisième région nue 32, qui lui aussi est formé par l'une des dents de l'anneau 18.

On remarquera aussi que le mécanisme d'entraînement et de limitation de mouvement M est, tout au moins dans sa course de correction C, un mécanisme à mouvement continu et freiné (grâce aux moyens de freinage 32,42), les seules positions discrètes qu'il est susceptible d'occuper étant les positions limites P1 et P2.

On précisera que l'actionnement du mécanisme d'entraînement M ne peut être commandé que dans une position tirée déterminée de la couronne 26, le mouvement du mécanisme M étant bloqué dans les autres positions de la couronne 26. Ce fonctionnement est similaire à celui d'une commande de quantième classique, et c'est la raison pour laquelle il ne sera pas ici d'avantage décrit.

On comprend donc que le disque d'orientation 16 est lié cinématiquement à un organe de commande, c'est-à-dire à l'ensemble tige 24-couronne 26, qui est extérieur à la montre, et ce avantageusement par le mécanisme d'entraînement et de limitation de mouvement M qui, d'une part, est susceptible d'immobiliser le disque d'orientation dans de multiples positions stables à l'intérieur de la course de correction C, et qui, d'autre part, est susceptible de limiter le déplacement de ce disque d'orientation 16 entre et dans les deux positions limites P1 et P2.

Aussi, puisque le disque d'orientation est uniquement piloté par la couronne 26, on comprend qu'il est susceptible de pivoter indépendamment de l'entraînement régulier du mouvement horométrique qui commande les aiguilles 1, 2 et 4.

En se référant désormais plus particulièrement aux figures 1 et 2, on remarquera que le cadran fixe 6 comporte dans une troisième région 50, qui est coaxiale aux deux premières 8 et 12, et qui est directement adjacente au disque d'orientation 16, des repères gradués 52 ménagés dans un secteur circulaire 54 de la troisème région 50.

Ces repères gradués 52 sont ménagés au regard de la marque N (Nord) du disque d'orientation 16, sensiblement en coïncidence avec la course de correction C dans laquelle, on le rappel, la marque N peut se déplacer, grâce au mécanisme d'entraînement M.

La graduation de ces repères 52 correspond de préférence à des fractions d'heure. Ces fractions d'heure sont marquées, dans cet exemple, dans le sens horaire l'une sur deux avec les valeurs +1/2 et +1, et dans le sens anti-horaire l'une sur deux avec les valeurs -1/2 et -1.

L'écart entre chaque valeur entière (1,2,3,...) correspond à celui qui serait donné si les repères 52 étaient gradués uniformément sur 360 degrés avec 24 graduations, c'est-à-dire comme une graduation d'un cadran 24 heures.

En d'autres termes, l'écart d'angle entre chaque valeur entière est égale à 360/24, soit 15 degrés.

Ainsi, puisque le mécanisme d'entraînement et de limitation de mouvement M est susceptible d'entraîner et d'immobiliser la marque N (Nord) par rapport aux repères gradués 52, dans plusieurs positions stables, déterminées et pouvant être choisies par l'utilisateur, il est possible de corriger toute variation entre l'heure solaire vraie et l'heure légale affichée par les aiguilles, respectivement des heures 1 et des minutes 2.

Il suffit pour cela, en fonction du lieu où l'on se situe, de déplacer la marque N à l'aide de la couronne 26, et d'amener cette marque en regard du repère correspondant à la variation entre les deux heures, légale et solaire vraie, à savoir en regard de la valeur +1/2 pour une variation positive de 30 minutes, en regard de +1 pour une variation positive d'une heure, et inversement dans l'autre sens pour les variations négatives.

Les repères 52, en combinaison avec le disque mobile et réglable 16, constituent donc des moyens de correction du positionnement des points cardinaux, aptes à prendre en compte l'équation du temps, c'est-à-dire toute variation entre l'heure légale et l'heure solaire vraie.

On remarquera par ailleurs que pour effectuer une correction à l'aide des moyens qui viennent d'être décrits, l'utilisateur n'effectue aucune correction de l'heure affichée, ni aucune modification de la position relative de l'aiguille solaire 4.

Il n'y a donc aucune confusion possible entre les deux heures, respectivement légale et solaire vraie, ni aucun perte d'heure.

De plus, la variation entre ces deux heures peut être directement visualisée et contrôlée, en regardant la position de la marque N sur les repères 52 et en lisant l'indication de variation donnée sur ceux-ci.

On précisera aussi que le mécanisme d'entraînement M, en limitant le déplacement angulaire du disque d'orientation mobile 16, entre les deux positions limites P1 et P2, constitue un système de sécurité contre toute manoeuvre erronée. En effet, l'indication du Nord ne peut être déplacée au-delà de sa course de correction C, si bien qu'il lui est impossible de venir occuper la place d'une autre indication de direction, telle qu'à l'extrême celle du Sud.

La disposition des points cardinaux N,S,W et E sur le disque 16 est celle qui correspond à l'orientation dans l'hémisphère nord, mais bien entendu, elle peut être inversée pour une utilisation dans l'hémisphère sud.

De plus, comme on le voit sur les figures 1 et 2, le cadran 6 comporte une quatrième région 56 dans laquelle sont inscrits la plupart des vents connus et qui est coaxiale aux trois autres en étant adjacente à celle référencée 8 où sont inscrites les heures, Ces vents dont la direction de provenance est généralement bien connue permettent de déterminer, en cas d'absence de soleil ou de soleil voilé, les autres points cardinaux.

Le fonctionnement de la montre boussole selon l'invention est le suivant.

Tout d'abord, on effectue l'opération de correction de l'équation du temps à l'aide de la couronne 26 que l'on tire dans une position déterminée , puis que l'on tourne dans un sens choisi, pour amener l'indication N (Nord) en regard de la graduation ou de la valeur correspondant à l'écart entre l'heure légale et l'heure solaire vraie.

Ensuite, on pousse la couronne 26 dans sa position initiale lorsque la correction est terminée.

Pour s'orienter, il suffit de pointer l'aiguille solaire 4 en direction du soleil, puis de lire sur le disque d'orientation l'indication de direction donnée par les points cardinaux N,S,W et E.

En se référant désormais aux figures 1 et 4 à 9, on décrira ci-après une lunette tournante selon l'invention qui est notamment destinée à équiper une montre boussole, telle que celle qui vient d'être décrite.

La lunette 100 selon l'invention est destinée à être montée autour du cadran 6, d'une montre boussole MB , telle que celle représentée à la figure 1.

Cette lunette 100, qui a une forme annulaire, est divisée au niveau de son diamètre D en deux secteurs 102 et 104, de préférence similaires. Les secteurs 102 et 104 ont donc respectivement une forme de "C", chacun de ces deux "C" présentant deux branches qui sont mises respectivement bout à bout avec les deux autres branches de l'autre "C".

Ces deux secteurs 102 et 104 sont liés entre eux par l'intermédiaire d'une articulation ou charnière 106, représentée de façon plus détaillée sur les figures 7 à 9.

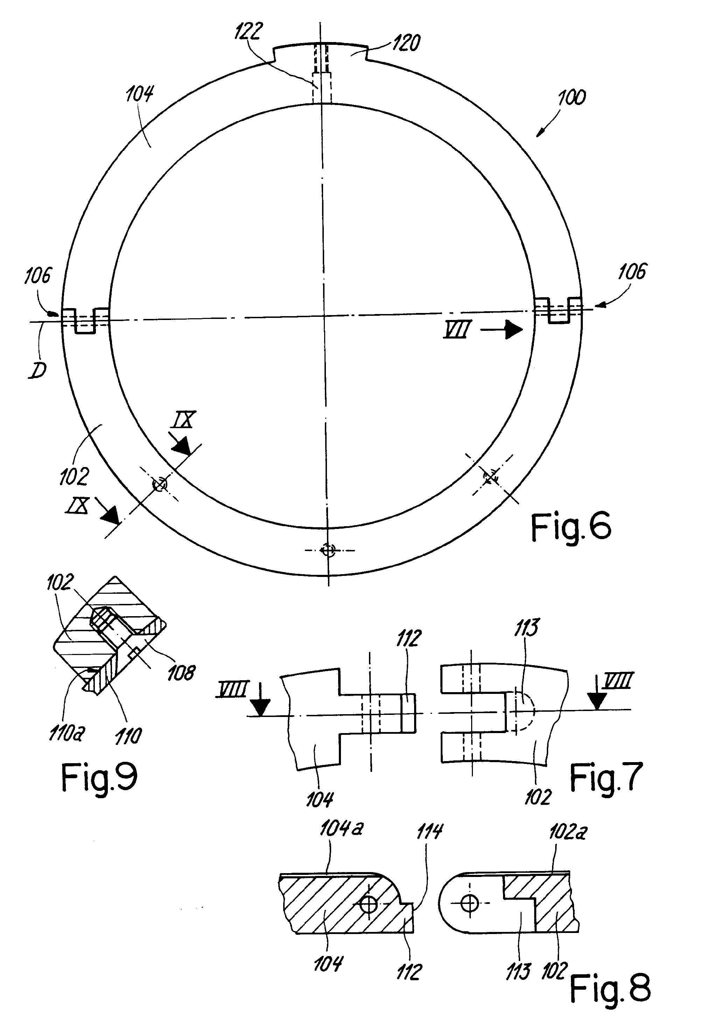

Le premier secteur 102 est fixé, par l'intermédiaire de trois vis 108, dont une est visible sur la figure 9, à une bague tournante 110 qui est maintenue et guidée en rotation sur la montre boussole MB. La réalisation du montage de la bague tournante 110 sur la montre MB est une opération classique qui ne sera donc pas décrite de façon plus détaillée.

De ce fait, le premier secteur rapporté 102 est mobile et est guidé en rotation par rapport à la boîte B de la montre MB. Puisque les deux secteurs 102 et 104 sont liés entre eux, cet ensemble 102-104 qui constitue l'essentiel de la lunette 100 selon l'invention, peut occuper de multiples positions angulaires autour de la boîte B de la montre MB, par rapport notamment au cadran 6.

Le second secteur 104 repose librement ,dans une première position, dite position rabattue ou couchée, par son flanc inférieur 104b sur la bague tournante 110.

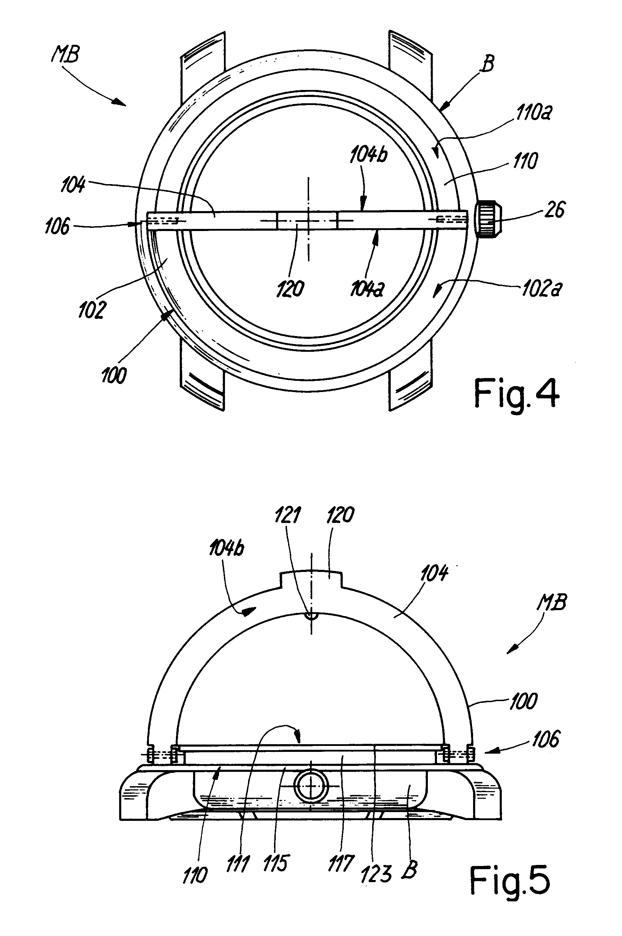

Grâce à la disposition de l'articulation 106, le second secteur 104 peut occuper, en plus de sa première position caractéristique représentée sur les figures 1 et 6, une seconde position caractéristique, dite relevée, représentée sur les figures 4 et 5, dans laquelle il peut venir chevaucher au moins partiellement le cadran 6, et plus particulièrement l'élément indicateur constitué par l'aiguille solaire 4.

La lunette 100 selon l'invention comporte de plus des moyens de blocage du secteur 104 lorsqu'il est dans sa position relevée.

Comme on le voit sur la figure 8, ces moyens de blocage sont constitués par un talon 112, dont un seul est représenté, ménagé à l'extrémité d'au moins l'une des branches du secteur relevable 104, et de préférence à l'extrémité de ces deux branches. A l'extrémité de la ou des branches correspondantes du secteur "fixe" 102 est prévu un évidement 113 débouchant en direction du talon 112 et en direction de la bague 110, non représentée sur cette figure.

Ce talon 112 qui est ménagé au voisinage de l'articulation 106, constitue un point dur lorsque le secteur 104 est amené de sa position rabattue, jusqu'à sa position relevée.

Le secteur 104 peut donc être maintenu fixement, de façon stable, dans une position relevée à 90 degrés de sa position rabattue.

On précisera qu'une autre inclinaison peut être choisie, par exemple pour des raisons esthétiques, simplement en donnant au talon 112 une autre forme que celle représentée. En effet, la surface portante 114 de ce talon 112, qui est destinée à venir reposer sur la bague 110 dans la position relevée du secteur 104, a dans l'exemple représenté une inclinaison à 90 degrés par rapport à son plan d'appui constitué par le flanc supérieur 110a de cette bague 110, en d'autres termes elle est ménagée perpendiculairement au secteur 104. C'est pourquoi ce secteur 104 se retrouve dans une position stable correspondante ( à 90 degrés ) lorsqu'il est dans sa position relevée.

On précisera ici que l'un des deux ou les deux secteurs 102 et 104 peuvent être, dans un autre mode de réalisation non représenté, constitués par des éléments annulaires partiels, non-continus, tels que des demi "C" à une seule branche. Dans ce cas, la lunette 100 ne comprendrait qu'une seule articulation 106.

La lunette 100 comporte de plus un onglet de préhension 120 permettant à l'utilisateur de saisir le secteur 104 et de le relever lorsqu'il est dans sa position rabattue sur la montre MB.

De la partie centrale de la bague tournante 110 s'éléve axialement une partie cylindrique 111 à l'extrémité libre de laquelle est ménagé un collet 112. L'écart entre ce collet 123 et la base 115 de la bague 110 forme une rainure circulaire 117.

Dans le secteur 104, et plus particulièrement dans l'onglet 120 est ménagé un orifice diamétral fileté 122, débouchant au moins vers la montre MB, et dans lequel peut être loger un dispositif d'arrêt, partiellement représenté, formé par une bille 121 qui est poussée par un ressort hélicoïdal et qui est destinée à venir s'engager dans la rainure circulaire 117 ménagée dans la bague 110. Lorsque le secteur 104 est rabattu, la bille 121 se rétracte au passage du collet 123 et sous l'action antagoniste du ressort vient se loger et s'encliqueter dans la rainure 117.

On remarquera que sur leur flanc supérieur respectivement 102a et 104a, les deux secteurs 102 et 104 comportent des graduations associées à des valeurs d'angles en degrés de 0 à 360.

Le fonctionnement de la lunette 100 selon l'invention est le suivant.

Lorsque l'utilisateur veut pointer en direction du soleil l'aiguille solaire 4 de la montre boussole MB, il prend tout d'abord l'onglet de préhension 120 et il relève le secteur 104. Il saisit ensuite ce secteur 104 dans sa position relevée comme l'anneau d'une clé et il fait pivoter toute la lunette 100 sur la boîte B pour disposer le secteur 104 sensiblement au droit de l'aiguille solaire 4, en chevauchement au moins partiel au dessus de celle-ci.

Ainsi, le secteur 104 constitue un index escamotable particulièrement apte à venir projeter son ombre sur l'aiguille solaire 4, de sorte d'orienter cette aiguille au mieux dans la direction du soleil.

Lorsque la position des différents points cardinaux à été déterminée par la montre boussole MB, comme expliqué ci-avant, l'utilisateur, après avoir tracé sur une carte la droite joignant le point où il se situe et celui qu'il veut atteindre, pose la montre MB sur la carte et met en coïncidence la marque N du Nord de la montre avec le Nord de la carte, l'axe central de la montre étant positionné sur le point de départ. A ce moment, l'utilisateur sait dans quelle direction se trouve le point qu'il veut atteindre.

L'utilisateur saisit de nouveau le secteur 104 qui est relevé pour faire tourner toute la lunette 100 et amener l'indication de la valeur 0 (zéro) , soit sur le trait qu'il a tracé sur la carte, soit sur l'indication du Nord marqué sur celle-ci. Il ramène ensuite le secteur 104 dans sa position rabattue, sur la bague 110.

A cet instant, l'utilisateur peut lire les indications inscrites sur la lunette 100 et déterminer, en degrés d'angle, la direction qu'il doit suivre.

On précisera de plus que les indications en degrés sont réalisées sur la lunette 100, de sorte qu'au moins la valeur 0 (zéro) soit marquée sur le secteur fixe 102.

Ainsi, lorsque l'utilisateur saisit le secteur 104 qui est relevé, les indications marquées sur la lunette 100 demeurent toujours visiblent et le O (zéro ) peut être correctement positionné.

## Revendications

1. Montre boussole du type à entraînement mécanique ou électromécanique, comprenant :
- au moins un élément indicateur de temps (4) entraîné cinématiquement en rotation par un mouvement horométrique mécanique ou électromécanique, et destiné notamment à être pointé en direction du soleil , et
- des moyen d'indication de direction (N,S,W,E) ménagés sur ladite montre, permettant de connaître, en fonction de l'orientation dudit moyen indicateur (4), la direction d'au moins un des points cardinaux, caractérisée en ce qu'elle comporte des moyens de déplacement des moyens d'indication de direction, conformés pour décaler angulairement, et par rapport à des moyens de correction (52), en une position fixement réglée, l'orientation des points cardinaux pour prendre en compte de façon systématique toute variation connue entre l'heure solaire vrai et l'heure légale .

2. Montre boussole selon la revendication 1, caractérisée en ce que les dits moyens de correction sont constitués par des repères (52), de préférence gradués, en regard desquels peut être positionné au moins un élément (N) des moyens d'indication de direction, tel qu'une marque de l'un des points cardinaux, ces moyens de correction permettant de visualiser directement et de contrôler la variation corrigée entre les heures respectivement solaire vraie et légale.

3. Montre boussole selon la revendication 2, caractérisée en ce qu'elle comporte un mécanisme de limitation de mouvement (M) susceptible d'entraîner et d'immobiliser dans plusieurs positions stables déterminées et choisies, ladite marque (N) par rapport auxdits repères (52).

4. Montre boussole selon la revendication 3, caractérisée en ce que lesdits repères (52) des moyens de correction sont ménagés sur un cadran (6) de la montre, qui comporte de préférence des indications horaires.

5. Montre boussole selon la revendication 4, caractérisée en ce que lesdites marques des points cardinaux sont matérialisées sur un disque d'orientation (16) susceptible de pivoter coaxialement à l'élément indicateur (4), indépendamment de l'entraînement régulier du mouvement horométrique.

6. Montre boussole selon la revendication 5, caractérisée en ce que le disque d'orientation (16) est lié cinématiquement à un organe de commande (24,26) accessible depuis l'extérieur de la montre.

7. Montre boussole selon la revendication 6, caractérisée en ce que le disque d'orientation (16) est lié audit organe de commande, tel qu'une couronne (26), par l'intermédiaire dudit mécanisme de limitation de mouvement (M).

8. Montre boussole selon la revendication 7, caractérisée en ce que ledit mécanisme de limitation de mouvement (M) est susceptible d'immobiliser le disque d'orientation (16) dans de multiples positions stables et de limiter son déplacement angulaire entre deux positions limites (P1,P2).

9. Montre boussole selon la revendication 8, caractérisée en ce que ledit mécanisme de limitation de mouvement (M) comporte un anneau intérieurement denté (18), du type anneau de quantièmes, qui engrène avec un pignon d'entraînement (22) commandé par la couronne (26) et sur lequel est fixé le disque d'orientation (16).

10. Montre boussole selon la revendication 9, caractérisée en ce que ledit mécanisme de limitation de mouvement (M) est un mécanisme à mouvement continu associé à des moyens (32,42) de freinage de son mouvement entre ses deux positions limites (P1,P2).

11. Montre boussole selon la revendication 10, caractérisée en ce que le dit anneau comporte au moins deux régions (28,30), dites nues, dépourvues de dents de sorte de découpler, dans au moins un sens de rotation de cet anneau (18), ledit pignon d'entraînement (22) et ledit anneau (18) dans les positions limites (P1,P2) du disque d'orientation (16).

12. Montre boussole selon la revendication 11, caractérisée en ce que lesdits moyens de freinage sont constitués par une troisième région nue (32) qui est ménagée sur le dit anneau (18) et sur laquelle frotte un organe élastique (42), tel qu'une lame de ressort du type ressort sautoir.

13. Montre boussole selon la revendication 12, caractérisée en ce que ledit organe élastique (42) est conformé pour venir en appui sur les bords extrêmes de ladite troisième région nue (32), tandis qu'il forme avec ceux-ci des moyens de butée dudit anneau (18) dans ses positions limites (P1,P2).

14. Montre boussole selon l'une quelconque des revendications précédentes, caractérisée en ce qu'elle comporte une lunette (100), pourvue d'un index escamotable (104) déplacable entre deux positions, une première position dans laquelle il est rabattu sur ladite lunette et une deuxième, dite relevée, dans laquelle il est apte à être disposé sensiblement au droit dudit élément indicateur de temps (4), en chevauchement au moins partiel au-dessus de celui-ci, de sorte de projeter sur cet élément indicateur (4) l'ombre du soleil.

15. Montre boussole selon la revendication 14, caractérisée en ce que ladite lunette (100) a une forme annulaire et est divisée en deux secteurs (102,104), de préférence similiaires, un premier secteur (102) qui est guidé en rotation par rapport à la boite (B) de ladite montre et un second secteur (104) qui constitue ledit index escamotable.

16. Montre boussole selon la revendication 15, caractérisée en ce que les deux secteurs (102,104) de la lunette (100) sont liés entre eux par l'intermédiaire d'une articulation ou charnière (106), sensiblement au niveau du diamètre (D) de ladite lunette.

17. Montre boussole selon la revendication 16, caractérisée en ce que ladite lunette (100) comporte des moyens de blocage (112) du secteur escamotable lorsqu'il est dans sa position relevée.

18. Montre boussole selon la revendication 17, caractérisée en ce que lesdits moyens de blocage sont constitués par un talon (112) ménagé sur le secteur escamotable (104), au voisinage de ladite articulation ou charnière (106).

19. Montre boussole selon la revendication 18, caractérisée en ce que ladite lunette (100) comporte un onglet de préhension (120) permettant de relever le secteur escamotable (104) lorsqu'il est dans sa position rabattue sur ladite montre.

20. Montre boussole selon la revendication 19, caractérisée en ce que ladite lunette (100) comporte des indications en degrés ménagés de préférence sur les deux secteurs, respectivement fixe (102) et escamotable (104).

21. Montre boussole selon la revendication 20, caractérisée en ce lesdites indications en degrés sont ménagées sur la lunette (100) de sorte qu'au moins la valeur zéro soit marquées sur le secteur fixe (102).

## Patentansprüche

1. Kompaßuhr einer mechanisch oder elektromechanisch angetriebenen Bauart, umfassend:
- mindestens ein Zeitanzeigeelement (4), das kinematisch zur Drehung von einem mechanischen oder elektromechanischen Zeitmeßwerk angetrieben wird und insbesondere dazu bestimmt ist, in Richtung der Sonne ausgerichtet zu werden, und
- Anzeigemittel der Richtung (N, S, W, E), die auf der Uhr ausgebildet sind und es ermöglichen, in Abhängigkeit von der Orientierung des Anzeigemittels (4) die Richtung mindestens eines der Kardinalpunkte zu kennen, dadurch gekennzeichnet, daß sie Mittel zum Verlagern der Richtungsanzeigemittel umfaßt, ausgebildet zur winkelmäßigen und relativ zu Korrekturmitteln (52) erfolgenden Versetzung der Orientierung der Kardinalpunkte in eine fest einregulierte Position, um in systematischer Weise jede bekannte Abweichung zwischen der wahren Sonnenzeit und der Ortszeit zu berücksichtigen.

2. Kompaßuhr nach Anspruch 1, dadurch gekennzeichnet, daß die Korrekturmittel von Markierungen (52) gebildet sind, vorzugsweise mit Strichteilung, gegenüber welchen mindestens ein Element (N) der Richtungsanzeigemittel, wie eine Bezeichnung eines der Kardinalpunkte, positionierbar ist, welche Korrekturmittel ermöglichen, die korrigierte Abweichung zwischen der wahren Sonnenzeit und der Ortszeit direkt zu visualisieren und zu kontrollieren.

3. Kompaßuhr nach Anspruch 2, dadurch gekennzeichnet, daß sie einen Mechanismus zum Begrenzen der Bewegung (M) umfaßt, ausgebildet zum Antreiben und Festlegen in mehreren stabilen vorbestimmten und gewählten Positionen der Bezeichnung (N) relativ zu den Markierungen (52).

4. Kompaßuhr nach Anspruch 3, dadurch gekennzeichnet, daß die Markierungen (52) der Korrekturmittel auf einem Zifferblatt (6) der Uhr angeordnet sind, welches vorzugsweise Zeitangaben umfaßt.

5. Kompaßuhr nach Anspruch 4, dadurch gekennzeichnet, daß die Bezeichnungen der Kardinalpunkte auf einer Orientierungsscheibe (16) materialisiert sind, die koaxial zum Anzeigeelement (4) verdrehbar ist, unabängig von dem regelmäßigen Antrieb des Zeitmeßwerks.

6. Kompaßuhr nach Anspruch 5, dadurch gekennzeichnet, daß die Orientierungsscheibe (16) kinematisch mit einem Steuerorgan (24, 26) verbunden ist, das von außerhalb der Uhr zugänglich ist.

7. Kompaßuhr nach Anspruch 6, dadurch gekennzeichnet, daß die Orientierungsscheibe (16) mit dem Steuerorgan, wie einer Krone (26), über den Begrenzungsmechanismus der Bewegung (M) verbunden ist.

8. Kompaßuhr nach Anspruch 7, dadurch gekennzeichnet, daß der Begrenzungsmechanismus der Bewegung (M) die Orientierungsscheibe (16) in einer Mehrzahl von stabilen Positionen festlegen kann und ihre Winkelverlagerung zwischen zwei Grenzpositionen (P1, P2) begrenzen kann.

9. Kompaßuhr nach Anspruch 8, dadurch gekennzeichnet, daß der Begrenzungsmechanismus der Bewegung (M) einen innenverzahnten Ring (18) vom Typ eines Datumringes umfaßt, der mit einem Antriebsritzel (22) kämmt, das von der Krone (26) steuerbar ist, und auf dem die Orientierungsscheibe (16) befestigt ist.

10. Kompaßuhr nach Anspruch 9, dadurch gekennzeichnet, daß der Begrenzungsmechanismus der Bewegung (M) ein Mechanismus mit kontiniuerlicher Bewegung ist, zugeordnet zu Mitteln (32, 42) zum Bremsen seiner Bewegung zwischen den beiden Grenzpositionen (P1, P2).

11. Kompaßuhr nach Anspruch 10, dadurch gekennzeichnet, daß der Ring mindestens zwei als nackt bezeichnete Bereiche (28, 30) umfaßt, die frei von Zähnen sind, derart, um in mindestens einer Drehrichtung des Ringes (18) das Antriebsritzel (22) und den Ring (18) in den Grenzpositionen (P1, P2) der Orientierungsscheibe (16) zu entkuppeln.

12. Kompaßuhr nach Anspruch 11, dadurch gekennzeichnet, daß die Bremsmittel von einem dritten nackten Bereich (32) gebildet sind, der auf dem Ring (18) vorgesehen ist und auf dem ein elastisches Organ (42), wie eine Blattfeder vom Kniefedertyp, reibt.

13. Kompaßuhr nach Anspruch 12, dadurch gekennzeichnet, daß das elastische Organ (42) ausgebildet ist, um in Anlage an den Extremkanten des dritten nackten Bereichs (32) zu gelangen, während sie mit jenen Anschlagmittel des Ringes (18) in seinen Grenzpositionen (P1, P2) bildet.

14. Kompaßuhr nach einem der vorangehenden Ansprüche, dadurch gekennzeichnet, daß sie eine Lünette (100) umfaßt, die mit einem einziehbaren Index (104) versehen ist, der zwischen zwei Positionen verlagerbar ist, einer ersten Position, in der er auf die Lünette zurückgelegt ist, und einer zweiten, als angehoben bezeichneten, in der er im wesentlichen senkrecht zu dem Zeitanzeigeelement (4) bringbar ist in mindestens teilweiser überlappung oberhalb desselben, derart, daß auf dieses Anzeigeelement (4) der Sonnenschatten projiziert wird.

15. Kompaßuhr nach Anspruch 14, dadurch gekennzeichnet, daß die Lünette (100) eine Kreisringform hat und in zwei Sektoren (102, 104), die vorzugsweise einander ähnlich sind, unterteilt ist, wobei ein erster Sektor (102), der drehbeweglich gegenüber dem Gehäuse (B) der Uhr geführt ist, und ein zweiter Sektor (104) den einziehbaren Index bildet.

16. Kompaßuhr nach Anspruch 15, dadurch gekennzeichnet, daß die beiden Sektoren (102, 104) der Lünette (100) miteinander über ein Gelenk oder Scharnier (106) verbunden sind, im wesentlichen in Höhe des Durchmessers (D) der Lünette.

17. Kompaßuhr nach Anspruch 16, dadurch gekenzeichnet, daß die Lünette (100) Blockiermittel (112) des einziehbaren Sektors umfaßt, wenn dieser in der angehobenen Position ist.

18. Kompaßuhr nach Anspruch 17, dadurch gekennzeichnet, daß die Blockiermittel von einem Absatz (112) gebildet werden, ausgebildet auf dem einziehbaren Sektor (104) nahe dem Gelenk oder Scharnier (106).

19. Kompaßuhr nach Anspruch 18, dadurch gekennzeichnet, daß die Lünette (100) einen Griffschlitz (120) umfaßt, der es ermöglicht, den einziehbaren Sektor (104) anzuheben, wenn er in seiner auf die Uhr zurückgelegten Position ist.

20. Kompaßuhr nach Anspruch 19, dadurch gekennzeichnet, daß die Lünette (100) Strichteilungsanzeigen aufweist, die vorzugsweise auf beiden Sektoren, nämlich dem festen (102) und dem einziehbaren (104), ausgebildet sind.

21. Kompaßuhr nach Anspruch 20, dadurch gekennzeichnet, daß die Strichanzeigen auf der Lünette (100) derart ausgebildet sind, daß mindestens der Wert Null auf dem festen Sektor (102) markiert ist.

## Claims

1. Compass watch of the mechanically or electro-mechanically driven type comprising :
- at least one time indicating element (4) kinematically driven in rotation by a mechanical or electro-mechanical horometric movement, and particularly intended to be pointed towards the sun, and
- direction indicating means (N, S, W, E) arranged on said watch enabling one to know, as a function of the orientation of said indicating means (4), the direction of at least one of the cardinal points, characterized in that it includes means for the displacement of the direction indicating means, said means being arranged to angularly change, with respect to correcting means (52), the orienta-tion of the cardinal points, to a fixedly adjusted position, to systematically take into account any known variation between true solar time and the legal time.

2. Compass watch according to claim 1, characterized in that said correcting means are formed by reference guides (52), preferably graduated, facing which at least one element (N) of the direction indicating means such as a mark for one of the cardinal points can be positioned, these correcting means enabling direct visualization and checking of the corrected variation between said true solar time and said legal time.

3. Compass watch according to claim 2, characterized in that it includes a motion limiting mechanism (M) adapted to drive and to immobilize said mark (N) relative to said reference guides (52), into several definite selected stable positions.

4. Compass watch according to claim 3, characterized in that said reference guides (52) for the correcting means are arranged on a dial (6) of the watch which preferably includes time indications.

5. Compass watch according to claim 4, characterized in that said marks for the cardinal points are materialized on an orientation disc (16) adapted to pivot coaxially to the indicating element (4) independently from the regular driving of the horometric movement.

6. Compass watch according to claim 5, characterized in that the orientation disc (16) is kinematically coupled to a control element (24, 26) accessible from the exterior of the watch.

7. Compass watch according to claim 6, characterized in that the orientation disc (16) is coupled to said control element, such as a crown (26), through said motion limiting mechanism (M).

8. Compass watch according to claim 7, characterized in that said motion limiting mechanism (M) is adapted to immobilize the orientation disc (16) in multiple stable positions and to limit its angular displacement between two bounding positions (P1, P2).

9. Compass watch according to claim 8, characterized in that said motion limiting mechanism (M) includes a ring bearing interior teeth (18) of the date ring type which meshes with a driving pinion (22) controlled by the crown (26) and on which the orientation disc (16) is secured.

10. Compass watch according to claim 9, characterized in that said motion limiting mechanism (M) is a mechanism having unbroken motion associated with means (32, 42) brak-ing its motion between its two bounding positions (P1, P2).

11. Compass watch according to claim 10, characterized in that said ring includes at least two bared regions (28, 30) without teeth in a manner to uncouple said driving pinion (22) and said ring (18) in at least one rotation sense of such ring (18) in the bounding positions (P1, P2) of the orientation disc (16).

12. Compass watch according to claim 11, characterized in that said braking means are constituted by a third bared region (32) arranged on said ring (18) and on which rubs an elastic element (42) such as a spring blade of the jumper spring type.

13. Compass watch according to claim 12, characterized in that said elastic element (42) is formed so as to bear on the end edges of said third bared region (32) whilst forming abutment means therewith for said ring (18) in its bounding positions (P1, P2).

14. Compass watch according to any one of the preceding claims, characterized in that it comprises a bezel (100) including a retractable index (104) displaceable between two positions, a first position in which it is folded back onto said bezel and a second raised position in which it is adapted to be arranged substantially at a right angle to said time indicating element (4), at least partially over-lapping above the latter in a manner to project the shadow from the sun onto this indicating element (4).

15. Compass watch according to claim 14, characterized in that said bezel (100) has an annular form and is divided into two sectors (102, 104), preferably substantially identical, a first (102) of which is guided in rotation relative to the case (B) of said watch and a second (104) which constitutes said retractable index.

16. Compass watch according to claim 15, characterized in that the two sectors (102, 104) of the bezel (100) are coupled together by means of a joint or hinge (106) sub-stantially at the level of the diameter (D) of said bezel.

17. Compass watch according to claim 16, characterized in that said bezel (100) comprises blocking means (112) for the retractable sector when it is in its raised position.

18. Compass watch according to claim 17, characterized in that said blocking means are formed by a heel (112) arranged on the retractable sector (104) in the vicinity of said joint or hinge (106).

19. Compass watch according to claim 18, characterized in that said bezel (100) includes a gripping thumbnail catch (120) enabling the raising of the retractable sector (104) when it is in its folded-back position on said watch.

20. Compass watch according to claim 19, characterized in that said bezel (100) includes degree indications preferably arranged on both the respective fixed (102) and retractable (104) sectors.

21. Compass watch according to claim 20, characterized in that said degree indications are arranged on the bezel (100) in a manner such that at least the zero value is marked on the fixed sector (102).
